# EUROPEAN PATENT APPLICATION

(11) **EP 4 351 153 A1**
(43) Date of publication of application: **10.04.2024**
(21) Application number: 21943221.8
(22) Date of filing: 24.12.2021
(51) Int. Cl.: H04N 21/462, H04N 21/466, H04N 21/2662, H04N 21/472, H04N 21/81

(54) **DISPLAY DEVICE**

(30) Priority: 28.05.2021 KR 20210068916
(71) Applicant: LG Electronics Inc., Yeongdeungpo-gu Seoul 07336 (KR)
(72) Inventor: KIM, Hyunseung, Seoul 06772 (KR)
(74) Representative: Schornack, Oliver
(86) International application number: PCT/KR2021/019862
(87) International publication number: WO 2022/250237

(57) **Abstract**

A display device according to an embodiment of the present disclosure may comprise: a housing; a roller which is rotatably accommodated in the housing; a display which has a screen size controllable by rotation of the roller; a wireless communication unit which, when a content recommendation command is received, receives a recommended content according to the content recommendation command from an external server; and a control unit which provides the recommended content in different modes according to screen sizes.

## Description

### [TECHNICAL FIELD]

The present disclosure relates to a display device, and more particularly to a method for recommending content in a display device having a rollable display.

### [BACKGROUND ART]

A display device is a device having a function of receiving, processing, and displaying an image which a user is able to watch. The display device receives, for example, a broadcast signal selected by the user among broadcast signals transmitted from a broadcasting station, separates an image signal from the received broadcast signals, and displays the separated image signal on a display.

Recently, with the development of broadcasting technology and network technology, the functions of the display device have been diversified, and the performance of the display device has been improved accordingly. That is, the display device has been developed to provide not only broadcast content, but also various other content to users. For example, the display device may provide not only programs received from broadcasting stations, but also game play, music listening, Internet shopping, user customized information, and the like using various applications. In order to perform such extended functions, the display device is basically connected to other devices or networks using various communication protocols to provide a user with ubiquitous computing environment. That is, the display device has evolved into a smart device that enables connectivity to a network and ubiquitous computing.

On the other hand, in recent years, a display that has enough elasticity to be greatly deformed has been developed. Such a display may be bent or folded, allowing the display device to have a more compact structure.

The display device may operate in a zero view mode where the display is fully retracted into a housing, a partial view mode where the display is partially extended from the housing, or a full view mode where the display is fully extended from the housing.

The display device provides a function for recommending content to a user in response to a content recommendation command, and in this case, most of the existing recommended content is tailored to a screen in full view mode. Therefore, when a content recommendation command is received while the display device is operating in the zero view mode or the partial view mode, the display device is able to output the recommended content after switching to the full view mode, thereby consuming unnecessary time to switch to the full view mode.

In addition, there may be a problem with the user's intention to receive content recommendations in the zero view mode or the partial view mode.

### [DISCLOSURE OF INVENTION]

### [TECHNICAL PROBLEM]

The present disclosure aims to minimize a time required to switch to a full view mode when recommending content.

The present disclosure aims to provide a content recommendation function even in a zero view mode or partial view mode.

### [TECHNICAL SOLUTION]

According to an embodiment of the present disclosure, a display device may include a housing, a roller which is rotatably accommodated in the housing, a display which has a screen size controllable by rotation of the roller, a wireless communication unit which, when a content recommendation command is received, receives a recommended content according to the content recommendation command from an external server, and a control unit which provides the recommended content in different modes according to screen sizes.

The controller may acquire a current screen size and output content available to a user in the acquired current screen size as recommended content.

The controller may transmit screen state information, including a current screen size, to an external server and receive recommended content corresponding to the current screen size from the external server.

The controller may receive a plurality of pieces of recommended content from an external server when receiving a content recommendation command and display at least one of the plurality of pieces of recommended content based on the current screen size.

The controller may perform filtering to determine pieces of recommended content available according to the current screen size when the plurality of pieces of recommended content, and output at least one of the pieces of filtered recommended content.

The controller may perform second filtering when there is a plurality of pieces of filtered content and output content most similar to content which had output in the same screen size as the current screen size in a previous operation.

The controller may provide recommended content in which audio is output along when the screen size is zero, provide recommended content in which audio and summary information about the audio are output when the screen size is a first size, and provide recommended content including an image or a video when the screen size is a second size larger than the first size.

The controller may output radio broadcasts, music, or audiobooks as the recommended content when the screen size is zero.

The controller may output song lyrics, music information, or conversation information as the summary information when the screen size is the first size, and output audio corresponding to the summary information together.

The controller may output broadcast programs, VOD, or applications when the screen size is the second size.

### [ADVANTAGEOUS EFFECTS]

According to the embodiment of the present disclosure, content capable of being output in the current display mode is recommended without switching a display mode when a content recommendation command is received, thereby minimizing the time required to switch the display mode and providing the recommended content more quickly.

Furthermore, according to the embodiment of the present disclosure, it is possible to recommend and provide arbitrary content not only in the full view mode but also in the zero view mode or the partial view mode.

### [BRIEF DESCRIPTION OF DRAWINGS]

Fig. 1 is a block diagram illustrating a configuration of a display device according to an embodiment of the present disclosure.
Fig. 2 is a block diagram illustrating a remote control device according to an embodiment of the present disclosure
Fig. 3 is a view illustrating an actual configuration of a remote control device according to an embodiment of the present disclosure.
Fig. 4 is a view illustrating an example of utilizing a remote control device according to an embodiment of the present disclosure.
FIG. 5 is a cross-sectional view showing an inside of a housing of a display device according to an embodiment of the present disclosure.
FIG. 6 is an exemplary view showing an appearance of a display device when a display mode is a zero view mode according to an embodiment of the present disclosure.
FIG. 7 is an exemplary view showing an appearance of a display device when a display mode is a partial view mode according to an embodiment of the present disclosure.
FIG. 8 is an exemplary view showing an appearance of a display device when a display mode is a full view mode according to an embodiment of the present disclosure.
FIG. 9 is an exemplary view showing an appearance of a display device when a display is in a full view mode according to an embodiment of the present disclosure.
FIG. 10 is an exemplary view showing an appearance of a display device when a display disclosure is in a partial view mode according to an embodiment of the present disclosure.
FIG. 11 is a ladder diagram illustrating a method by which a display device according to a first embodiment of the present disclosure displays recommended content according to a content recommendation command.
FIG. 12 is a ladder diagram illustrating a method by which a display device according to a second embodiment of the present disclosure displays recommended content according to a content recommendation command.
FIG. 13 is a flowchart showing an example in which step S29 of FIG. 12 is embodied.
FIG. 14 is an example diagram illustrating a method of displaying recommended content according to a current screen in a display device according to various embodiments of the present disclosure.
FIG. 15 is an example diagram illustrating a method of displaying a notification for recommended content according to a current screen by a display device according to an embodiment of the present disclosure.

### [BEST MODE FOR CARRYING OUT THE INVENTION]

Hereinafter, embodiments of the present disclosure are described in more detail with reference to accompanying drawings and regardless of the drawings symbols, same or similar components are assigned with the same reference numerals and thus overlapping descriptions for those are omitted. The suffixes "module" and "unit" for components used in the description below are assigned or mixed in consideration of easiness in writing the specification and do not have distinctive meanings or roles by themselves. In the following description, detailed descriptions of well-known functions or constructions will be omitted since they would obscure the invention in unnecessary detail. Additionally, the accompanying drawings are used to help easily understanding embodiments disclosed herein but the technical idea of the present disclosure is not limited thereto. It should be understood that all of variations, equivalents or substitutes contained in the concept and technical scope of the present disclosure are also included.

It will be understood that the terms "first" and "second" are used herein to describe various components but these components should not be limited by these terms. These terms are used only to distinguish one component from other components.

In this disclosure below, when one part (or element, device, etc.) is referred to as being 'connected' to another part (or element, device, etc.), it should be understood that the former can be 'directly connected' to the latter, or 'electrically connected' to the latter via an intervening part (or element, device, etc.). It will be further understood that when one component is referred to as being 'directly connected' or 'directly linked' to another component, it means that no intervening component is present.

Singular expressions include plural expressions, unless the context clearly indicates otherwise.

In this application, terms such as "comprise" or "have" are intended to designate the presence of features, numbers, steps, operations, components, parts, or a combination thereof described in the specification, but one or more of them. It should be understood that this does not exclude in advance the presence or addition of other features, numbers, steps, operations, components, parts, or combinations thereof.

The display described herein may be a rollable display. Therefore, the display device described in this specification includes a TV including a rollable display, a smart TV, a network TV, and a HBBTV(Hybrid Brodacast Broadband Television), Internet TV, Web TV, IPTV(Internet Protocol Television), digital signage, desktop computers, mobile phones, smart phones, laptop computers, digital broadcasting terminals, PDA(personal digital assistants), PMP(portable multimedia player), navigation, slate PC, tablet PC, ultrabook, wearable device, etc. Here, a rollable display refers to a display unit that can be rolled in a roll shape, and may include a flexible display that can be bent, a foldable display that can be folded, etc.

Therefore, it is natural that the embodiments described in this specification are applied not only to smart TVs, but also to mobile terminals with rollable displays, such as smart phones.

Additionally, the display described in this specification may be a display that is covered by a cover. Therefore, similarly, the display device described in this specification, where at least a portion of the screen can be covered by a cover may be a TV, a smart TV, a network TV, a HBBTV(Hybrid Broadband Television), an Internet TV, a Web TV, an Internet TV(Internet Protocol Television), digital signage, desktop computer, mobile phone, smart phone, laptop computer, digital broadcasting terminal, PDA(personal digital assistants), PMP(portable multimedia player), navigation, slate PC, tablet PC, ultrabook, and wearable device.

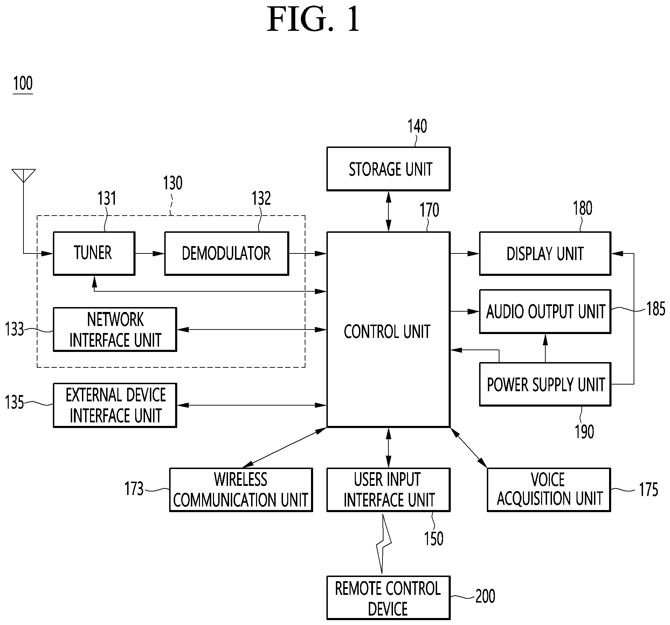

Fig. 1 is a block diagram illustrating a configuration of a display device according to an embodiment of the present disclosure.

Referring to FIG. 1, a display device 100 may include a broadcast reception module 130, an external device interface unit 135, a storage unit 140, a user input unit 150, a control unit 170, a wireless communication interface unit 173, a display unit 180, an audio output unit 185, and a power supply unit 190.

The broadcast reception module 130 may include a tuner 131, a demodulator 132, and a network interface 133.

The tuner 131 may select a specific broadcast channel according to a channel selection command. The tuner 131 may receive broadcast signals for the selected specific broadcast channel.

The demodulation unit 132 may divide the received broadcast signals into video signals, audio signals, and broadcast program-related data signals, and may restore the divided video signals, audio signals, and data signals into an output available form.

The network interface 133 may provide an interface for connecting the display device 100 to a wired/wireless network comprising internet network. The network interface 133 may transmit or receive data to or from another user or another electronic device through an accessed network or another network linked to the accessed network.

The network interface unit 133 may access a predetermined webpage through an accessed network or another network linked to the accessed network. That is, the network interface unit 133 may transmit or receive data to or from a corresponding server by accessing a predetermined webpage through the network.

The network interface unit 133 may receive content or data provided from a content provider or a network operator. That is, the network interface unit 133 may receive content, such as movies, advertisements, games, VODs, and broadcast signals, which are provided from the content provider or the network operator, and information relating thereto through the network.

In addition, the network interface unit 133 may receive firmware update information and update files provided from the network operator, and may transmit data to the Internet or content provider or the network operator.

The network interface 133 may select and receive a desired application among applications open to the air, through network.

The external device interface unit 135 may receive an application or an application list in an adjacent external device and deliver the application or the application list to the control unit 170 or the storage unit 140.

The external device interface unit 135 may provide a connection path between the display device 100 and an external device. The external device interface unit 135 may receive at least one of an image or audio outputted from an external device that is wirelessly or wiredly connected to the display device 100 and deliver the received image or the audio to the controller. The external device interface unit 135 may include a plurality of external input terminals. The plurality of external input terminals may include an RGB terminal, at least one High Definition Multimedia Interface (HDMI) terminal, and a component terminal.

An image signal of an external device inputted through the external device interface unit 135 may be outputted through the display unit 180. A sound signal of an external device inputted through the external device interface unit 135 may be outputted through the audio output unit 185.

An external device connectable to the external device interface unit 135 may be one of a set-top box, a Blu-ray player, a DVD player, a game console, a sound bar, a smartphone, a PC, a USB Memory, and a home theater system but this is just exemplary.

Additionally, some content data stored in the display device 100 may be transmitted to a user or an electronic device, which is selected from other users or other electronic devices pre-registered in the display device 100.

The storage unit 140 may store signal-processed image, voice, or data signals stored by a program in order for each signal processing and control in the control unit 170.

In addition, the storage unit 140 may perform a function for temporarily storing image, voice, or data signals output from the external device interface unit 135 or the network interface unit 133, and may store information on a predetermined image through a channel memory function.

The storage unit 140 may store an application or an application list input from the external device interface unit 135 or the network interface unit 133.

The display device 100 may play content files (e.g., video files, still image files, music files, document files, application files, etc.) stored in the storage unit 140, and may provide the content files to a user.

The user input unit 150 may transmit signals input by a user to the control unit 170, or may transmit signals from the control unit 170 to a user. For example, the user input unit 150 may receive or process control signals such as power on/off, channel selection, and screen setting from the remote control device 200 or transmit control signals from the control unit 170 to the remote control device 200 according to various communication methods such as Bluetooth, Ultra Wideband (WB), ZigBee, Radio Frequency (RF), and IR communication methods.

In addition, the user input unit 150 may transmit, to the control unit 170, control signals input from local keys (not shown) such as a power key, a channel key, a volume key, and a setting key.

Image signals that are image-processed by the control unit 170 may be input to the display unit 180 and displayed as images corresponding to the image signals. In addition, image signals that are image-processed by the control unit 170 may be input to an external output device through the external device interface unit 135.

Voice signals processed by the control unit 170 may be output to the audio output unit 185. In addition, voice signals processed by the control unit 170 may be input to the external output device through the external device interface unit 135.

Additionally, the control unit 170 may control overall operations of the display device 100.

In addition, the control unit 170 may control the display device 100 by a user command or an internal program input through the user input unit 150, and may access the network to download a desired application or application list into the display device 100.

The control unit 170 may output channel information selected by a user together with the processed image or voice signals through the display unit 180 or the audio output unit 185.

In addition, the control unit 170 may output image signals or voice signals of an external device such as a camera or a camcorder, which are input through the external device interface unit 135, through the display unit 180 or the audio output unit 185, according to an external device image playback command received through the user input unit 150.

Moreover, the control unit 170 may control the display unit 180 to display images, and may control the display unit 180 to display broadcast images input through the tuner 131, external input images input through the external device interface unit 135, images input through the network interface unit, or images stored in the storage unit 140. In this case, an image displayed on the display unit 180 may be a still image or video and also may be a 2D image or a 3D image.

Additionally, the control unit 170 may play content stored in the display device 100, received broadcast content, and external input content input from the outside, and the content may be in various formats such as broadcast images, external input images, audio files, still images, accessed web screens, and document files.

Moreover, the wireless communication unit 173 may perform wired or wireless communication with an external device. The wireless communication unit 173 may perform short-range communication with an external device. For this, the wireless communication unit 173 may support short-range communication by using at least one of Bluetooth^{™}, Bluetooth Low Energy (BLE), Radio Frequency Identification (RFID), Infrared Data Association (IrDA), Ultra Wideband (UWB), ZigBee, Near Field Communication (NFC), Wireless-Fidelity (Wi-Fi), Wi-Fi Direct, and Wireless Universal Serial Bus (USB) technologies. The wireless communication unit 173 may support wireless communication between the display device 100 and a wireless communication system, between the display device 100 and another display device 100, or between networks including the display device 100 and another display device 100 (or an external server) through wireless area networks. The wireless area networks may be wireless personal area networks.

Herein, the other display device 100 may be a mobile terminal such as a wearable device (for example, a smart watch, a smart glass, and a head mounted display (HMD)) or a smartphone, which is capable of exchanging data (or interworking) with the display device 100. The wireless communication unit 173 may detect (or recognize) a wearable device capable of communication around the display device 100. Furthermore, if the detected wearable device is a device authenticated to communicate with the display device 100, the control unit 170 may transmit at least part of data processed in the display device 100 to the wearable device through the wireless communication unit 173. Therefore, a user of the wearable device may use the data processed by the display device 100 through the wearable device.

The voice acquisition unit 175 may acquire audio. The voice acquisition unit 175 may include at least one microphone (not shown) and may acquire audio around the display device 100 through the microphone (not shown).

The display unit 180 may convert image signals, data signals, or on-screen display (OSD) signals, which are processed in the control unit 170, or images signals or data signals, which are received in the external device interface unit 135, into R, G, and B signals to generate driving signals.

Furthermore, the display device 100 shown in Fig. 1 is just one embodiment of the present disclosure and thus, some of the components shown may be integrated, added, or omitted according to the specification of the actually implemented display device 100.

That is, if necessary, two or more components may be integrated into one component, or one component may be divided into two or more components. Additionally, a function performed by each block is to describe an embodiment of the present disclosure and its specific operation or device does not limit the scope of the present disclosure.

According to another embodiment of the present disclosure, unlike Fig. 1, the display device 100 may receive images through the network interface unit 133 or the external device interface unit 135 and play them without including the tuner 131 and the demodulation unit 132.

For example, the display device 100 may be divided into an image processing device such as a set-top box for receiving broadcast signals or contents according to various network services and a content playback device for playing content input from the image processing device.

In this case, an operating method of a display device according to an embodiment of the present disclosure described below may be performed by one of the display device described with reference to Fig. 1, an image processing device such as the separated set-top box, and a content playback device including the display unit 180 and the audio output unit 185.

The audio output unit 185 receives the audio-processed signal from the control unit 170 to output an audio signal.

The power supply unit 190 supplies the corresponding power to the entire display device 100. Particularly, power may be supplied to the control unit 170 that is capable of being implemented in the form of a system on chip (SOC), the display unit 180 for displaying an image, the audio output unit 185 for outputting audio, and the like.

Specifically, the power supply unit 190 may include a converter that converts AC power to DC power and a DC/DC converter that converts a level of the DC power.

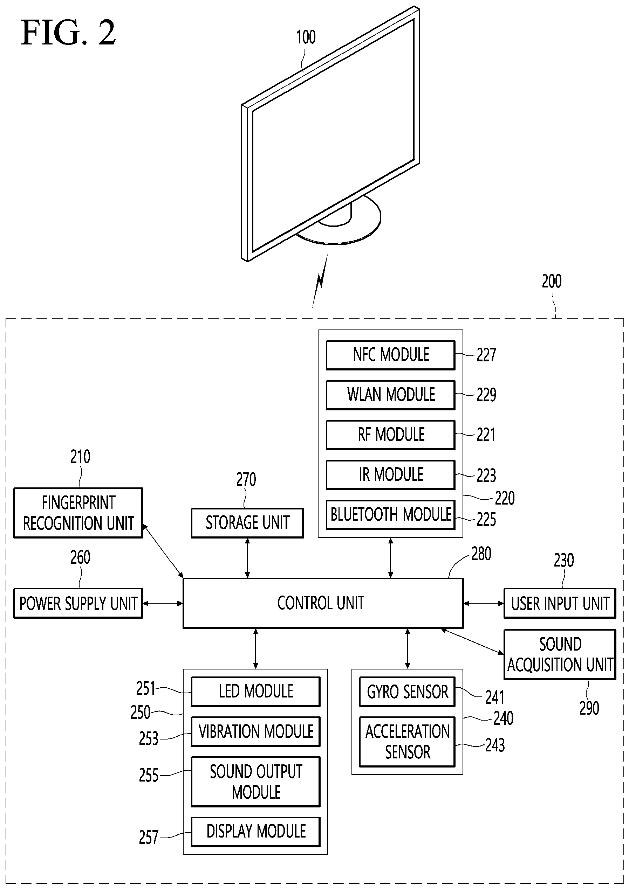

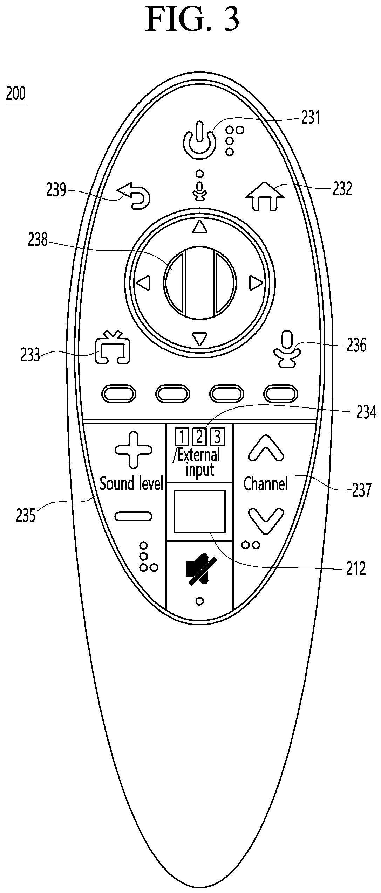

A remote control device according to an embodiment of the present disclosure will be described with reference to Figs. 2 and 3.

Fig. 2 is a block diagram illustrating a remote control device according to an embodiment of the present disclosure and Fig. 3 is a view illustrating an actual configuration of a remote control device according to an embodiment of the present disclosure.

First, referring to Fig. 2, a remote control device 200 may include a fingerprint recognition unit 210, a wireless communication unit 220, a user input unit 230, a sensor unit 240, an output unit 250, a power supply unit 260, a storage unit 270, a control unit 280, and a sound acquisition unit 290.

Referring to Fig. 2, the wireless communication unit 220 transmits/receives signals to/from an arbitrary any one of display devices according to the above-mentioned embodiments of the present disclosure.

The remote control device 200 may include a radio frequency (RF) module 221 capable of transmitting or receiving signals to or from the display device 100 according to an RF communication standard, and an IR module 223 capable of transmitting or receiving signals to or from the display device 100 according to an IR communication standard. In addition, the remote control device 200 may include a Bluetooth module 225 capable of transmitting or receiving signals to or from the display device 100 according to a Bluetooth communication standard. In addition, the remote control device 200 may include an NFC module 227 capable of transmitting or receiving signals to or from the display device 100 according to an NFC communication standard, and a wireless LAN (WLAN) module 229 capable of transmitting or receiving signals to or from the display device 100 according to a WLAN communication standard.

In addition, the remote control device 200 may transmit signals containing information on the movement of the remote control device 200 to the display device 100 through the wireless communication unit 220.

Moreover, the remote control device 200 may receive signals transmitted from the display device 100 through the RF module 221 and if necessary, may transmit a command for power on/off, channel change, and volume change to the display device 100 through the IR module 223.

The user input unit 230 may be configured with a keypad, a button, a touch pad, or a touch screen. A user may operate the user input unit 230 to input a command relating to the display device 100 to the remote control device 200. If the user input unit 230 includes a hard key button, a user may input a command relating to the display device 100 to the remote control device 200 through the push operation of the hard key button. This will be described with reference to Fig. 3.

Referring to Fig. 3, the remote control device 200 may include a plurality of buttons. The plurality of buttons may include a fingerprint recognition button 212, a power button 231, a home button 232, a live button 233, an external input button 234, a volume control button 235, a voice recognition button 236, a channel change button 237, an OK button 238, and a back button 239.

The fingerprint recognition button 212 may be a button for recognizing a user's fingerprint. According to an embodiment of the present disclosure, the fingerprint recognition button 212 may perform a push operation and receive a push operation and a fingerprint recognition operation. The power button 231 may be a button for turning on/off the power of the display device 100. The home button 232 may be a button for moving to the home screen of the display device 100. The live button 233 may be a button for displaying live broadcast programs. The external input button 234 may be a button for receiving an external input connected to the display device 100. The volume control button 235 may be a button for controlling a volume output from the display device 100. The voice recognition button 236 may be a button for receiving user's voice and recognizing the received voice. The channel change button 237 may be a button for receiving broadcast signals of a specific broadcast channel. The OK button 238 may be a button for selecting a specific function, and the back button 239 may be a button for returning to a previous screen.

Fig. 2 is described again.

If the user input unit 230 includes a touch screen, a user may touch a soft key of the touch screen to input a command relating to the display device 100 to the remote control device 200. In addition, the user input unit 230 may include various kinds of input interfaces operable by a user, for example, a scroll key and a jog key, and this embodiment does not limit the scope of the present disclosure.

The sensor unit 240 may include a gyro sensor 241 or an acceleration sensor 243. The gyro sensor 241 may sense information on the movement of the remote control device 200.

For example, the gyro sensor 241 may sense information on an operation of the remote control device 200 on the basis of x, y, and z axes and the acceleration sensor 243 may sense information on a movement speed of the remote control device 200. Moreover, the remote control device 200 may further include a distance measurement sensor that senses a distance with respect to the display unit 180 of the display device 100.

**The** output unit 250 may output image or voice signals in response to the operation of the user input unit 230, or may output image or voice signals corresponding to signals transmitted from the display device 100. A user may recognize whether the user input unit 230 is operated or the display device 100 is controlled through the output unit 250.

For example, the output unit 250 may include an LED module 251 for flashing, a vibration module 253 for generating vibration, a sound output module 255 for outputting sound, or a display module 257 for outputting an image, if the user input unit 230 is manipulated or signals are transmitted/received to/from the display device 100 through the wireless communication unit 220.

Additionally, the power supply unit 260 supplies power to the remote control device 200 and if the remote control device 200 does not move for a predetermined time, stops the power supply, so that power waste may be reduced. The power supply unit 260 may resume the supply of power if a predetermined key provided at the remote control device 200 is operated.

**The** storage unit 270 may store various kinds of programs and application data required to control or operate the remote control device 200. If the remote control device 200 transmits/receives signals wirelessly through the display device 100 and the RF module 221, the remote control device 200 and the display device 100 transmits/receives signals through a predetermined frequency band.

The control unit 280 of the remote control device 200 may store, in the storage unit 270, information on a frequency band for transmitting/receiving signals to/from the display device 100 paired with the remote control device 200 and refer to it.

The control unit 280 controls general matters relating to the control of the remote control device 200. The control unit 280 may transmit a signal corresponding to a predetermined key operation of the user input unit 230 or a signal corresponding to the movement of the remote control device 200 sensed by the sensor unit 240 to the display device 100 through the wireless communication unit 220.

In addition, the sound acquisition unit 290 of the remote control device 200 may acquire voice.

**The** sound acquisition unit 290 may include at least one microphone and acquire voice through the microphone.

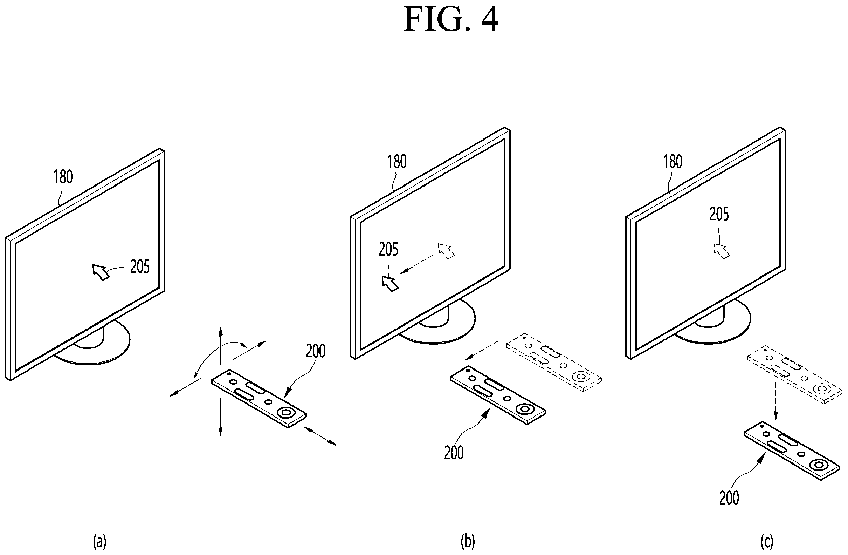

Next, Fig. 4 is described.

Fig. 4 is a view illustrating an example of utilizing a remote control device according to an embodiment of the present disclosure.

Fig. 4(a) illustrates that a pointer 205 corresponding to the remote control device 200 is displayed on the display unit 180.

**A** user may move or rotate the remote control device 200 vertically or horizontally. The pointer 205 displayed on the display unit 180 of the display device 100 corresponds to a movement of the remote control device 200. Since the corresponding pointer 205 is moved and displayed according to a movement on a 3D space as show in the drawing, the remote control device 200 may be referred to as a spatial remote control device.

Fig. 4(b) illustrates that if a user moves the remote control device 200, the pointer 205 displayed on the display unit 180 of the display device 100 is moved to the left according to the movement of the remote control device 200.

Information on a movement of the remote control device 200 detected through a sensor of the remote control device 200 is transmitted to the display device 100. The display device 100 may calculate the coordinates of the pointer 205 from the information on the movement of the remote control device 200. The display device 100 may display the pointer 205 to match the calculated coordinates.

Fig. 4(c) illustrates that while a specific button in the remote control device 200 is pressed, a user moves the remote control device 200 away from the display unit 180. Thus, a selected region in the display unit 180 corresponding to the pointer 205 may be zoomed in and displayed in an enlarged size.

On the other hand, if a user moves the remote control device 200 close to the display unit 180, a selection area in the display unit 180 corresponding to the pointer 205 may be zoomed out and displayed in a reduced size.

On the other hand, if the remote control device 200 is moved away from the display unit 180, a selection area may be zoomed out and if the remote control device 200 is moved closer to the display unit 180, a selection area may be zoomed in.

Additionally, if a specific button in the remote control device 200 is pressed, recognition of a vertical or horizontal movement may be excluded. That is, if the remote control device 200 is moved away from or closer to the display unit 180, the up, down, left, or right movement cannot be recognized and only the back and forth movement may be recognized. While a specific button in the remote control device 200 is not pressed, only the pointer 205 is moved according to the up, down, left or right movement of the remote control device 200.

Moreover, the moving speed or moving direction of the pointer 205 may correspond to the moving speed or moving direction of the remote control device 200.

Furthermore, a pointer in this specification means an object displayed on the display unit 180 in response to an operation of the remote control device 200. Therefore, in addition to the arrow form displayed as the pointer 205 in the drawing, various forms of objects are possible. For example, the above concept includes a point, a cursor, a prompt, and a thick outline. Then, the pointer 205 may be displayed in correspondence to one point of a horizontal axis and a vertical axis on the display unit 180 and also may be displayed in correspondence to a plurality of points such as a line and a surface.

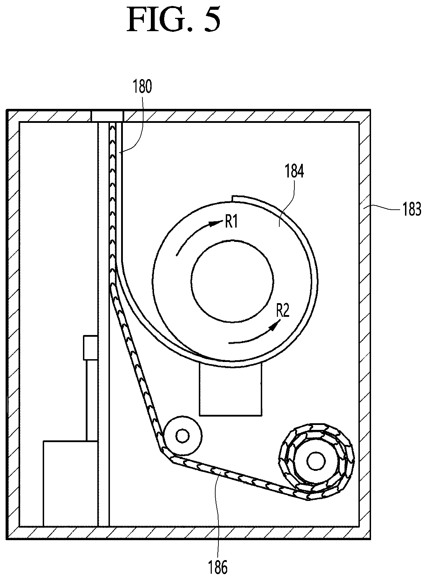

Next, FIG. 5 is a cross-sectional view showing an inside of a housing of a display device according to an embodiment of the present disclosure.

The display device 100 may include a housing 183, a display 180 that is extendable from and retractable into the housing 183, and a roller 184 that guides the display 180 to be wound or unwound. As described above, the display 180 that is retracted into or extended from the housing 183 may be a rollable display, and the rollable display may be a display that is sufficiently elastic to allow for large deformations.

The roller 184 may be accommodated in the housing 183. The roller 184 may be wound around the display 180 to resize the screen. A space may be formed in the housing 183 to accommodate the roller 184.

The roller 184 may be rotatable to wind or unwind the display 180. The roller 184 may be a guide bar that guides the display 180 to be wound or unwound.

Referring to FIG. 5, when the roller 184 is rotated in the direction R1 , the display 180 may be extended from the housing 183. On the other hand, when the roller 184 is rotated in the direction R2, the display 180 may be retracted into the housing 183 while being wound around the periphery of the roller 184. In this way, the display 180 may be extended or retracted in the vertical direction.

As illustrated in FIG. 5, the display 180 may be extended or retracted in the vertical direction. Alternatively, according to an embodiment, the display device 100 may be configured such that the display 180 is extended or retracted in a left-to-right direction.

The display 180 may be extended from and retracted into the housing 183 according to the rotation of the roller 184.

The controller 170 may control the display 80 such that content is displayed in an area extended from the housing 183 of the display 180.

According to an embodiment, the display device 100 may further include a cover 186. The cover 186 is disposed inside the housing 183, and may protect the display 180 retracted into the housing 183.

As the display 180 is extended or retracted from or into the display 180 as described above, the area in which the content is displayed may increase or decrease. That is, a display area of the content in the display 180 may be changed according to the extension or retraction of the display 180.

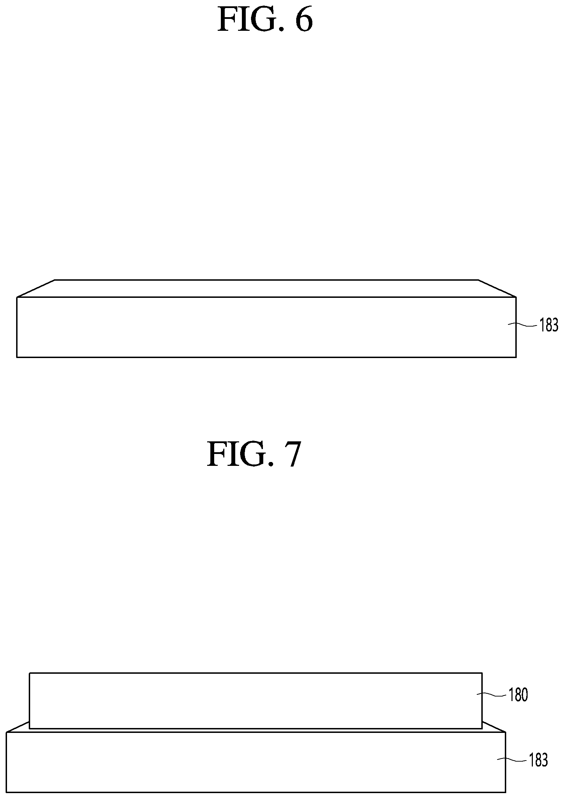

Next, modes of the display 180 implemented with a rollable display will be described with reference to FIGS. 6 to 8.

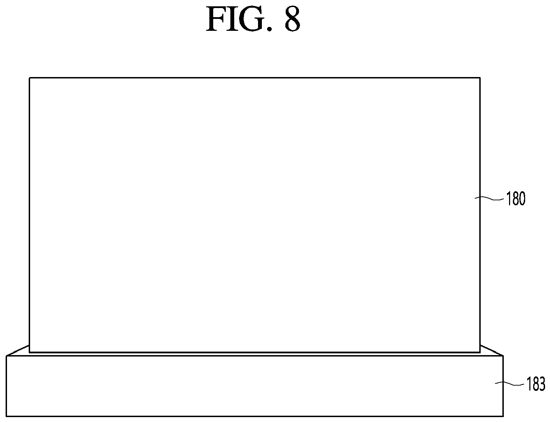

FIG. 6 is an exemplary view showing an appearance of a display device when a display mode is a zero view mode according to an embodiment of the present disclosure, FIG. 7 is an exemplary view showing an appearance of a display device when a display mode is a partial view mode according to an embodiment of the present disclosure, and FIG. 8 is an exemplary view showing an appearance of a display device when a display mode is a full view mode according to an embodiment of the present disclosure.

On the other hand, terms used in the present disclosure, for example, 'zero view mode', 'partial view mode' and 'full view mode' are only given as examples for convenience of description, and therefore, the these terms may be changed. Accordingly, the present disclosure is not limited to the terms described above.

The display 180 may be controlled in the zero view mode, partial view mode, or full view mode by rotation of the roller 184.

In the zero view mode, the display 180 may be a mode in which the entire display 180 is operated while being retracted into the housing 183. As shown in FIG. 6, in the zero view mode, the entire display 180 may be positioned inside the housing 183.

For example, when the display device 100 operates in a speaker mode, the display may be controlled in the zero view mode. For example, when the display device 100 is powered off, the display 180 may be controlled in the zero view mode.

When the display 180 is in the zero view mode, content may not be displayed on all areas of the display 180. The display 180 may be turned off in the zero view mode.

The partial view mode may be a mode in which the display 180 operates while a portion of the display unit 180 is being extended from the housing 183. The partial view mode may be a mode in which the display 180 operates while being extended to be shorter from the housing 183 than the full view mode. As shown in FIG. 7, in the partial view mode, a portion of the display 180 may be located inside the housing 183 and a remaining portion of the display 180 may be located outside the housing 183.

For example, when the display device 100 operates in a menu mode, a mood mode, a music mode, a frame mode, a watch mode, or the like, the display 180 may be controlled in the partial view mode.

When the display 180 is in the partial view mode, the display 180 may display content only in an area extended from the housing 183. That is, in the partial view mode, content may not be displayed in an area of the display 180 that is retracted into the housing 183.

On the other hand, the length of the display 180 that is extended from the housing 183 in the partial view mode may vary. The extended length of the display 180 shown in FIG. 7 is merely an example for purposes of description. That is, a case in which the display 180 is extended less than the extended length of the display 180 in the full view mode may be included in the partial view mode. The partial view mode may include a half view mode in which the extended length of the display 180 is half the extended length of the display 180 in the full view mode, and a line view mode in which the extended length of the display 180 is less than the extended length of the display 180 in the full view mode.

The full view mode may be a mode in which the display 180 operates in a state in which the display unit 180 is maximally extended from the housing 183. That is, the full view mode may be a mode in which the length of the display 180 extended from the housing 183 is the maximum extended length. As shown in FIG. 8, in the full view mode, the display 180 may be fully extended from the housing 183.

For example, when the display device 100 operates in a normal mode, the display 180 may be controlled in the full view mode, and in this case, the normal mode may be a mode for outputting broadcast images, images input from the external device interface unit 135, or the like.

When the display 180 is in the full view mode, the display 180 may display content in the area extended from the housing 183. In the full view mode, the display 180 may display content in all of areas of the display 180 which are capable of outputting images.

As described with reference to FIGS. 6 to 8, the display area of the content may vary according to a display mode, that is, the extended length of the display 180.

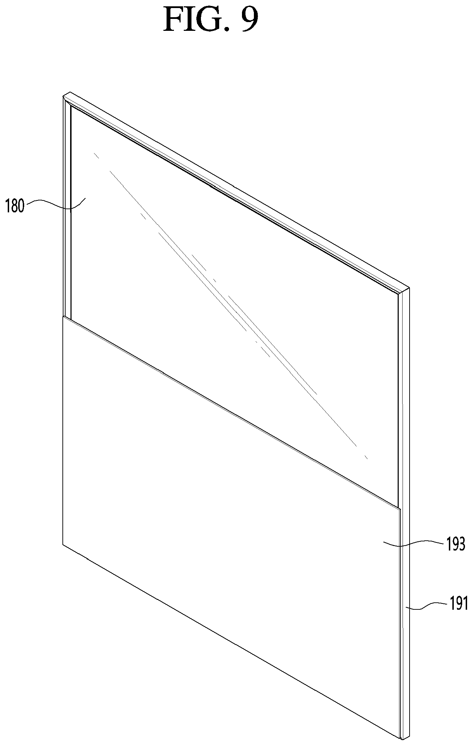

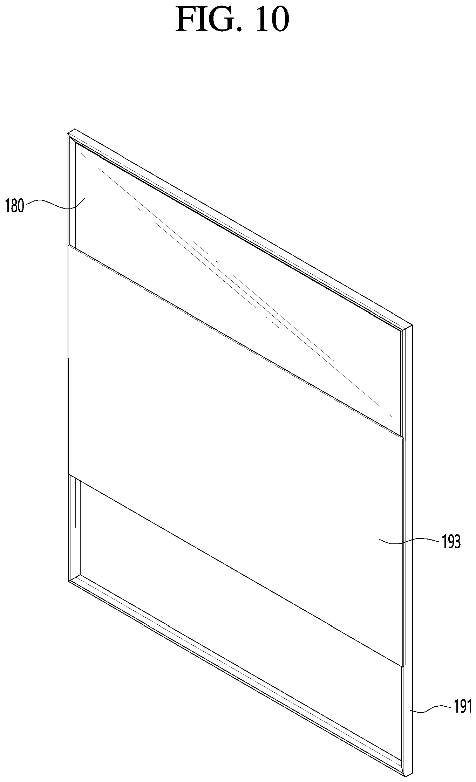

Next, referring to FIGS. 9 and 10, modes of the display 180 implemented to be covered by a cover will be described.

FIG. 9 is an exemplary view showing an appearance of a display device when a display is in a full view mode according to an embodiment of the present, and FIG. 10 is an exemplary view showing an appearance of a display device when a display disclosure is in a partial view mode according to an embodiment of the present.

As shown in FIGS. 9 and 10, the display device 100 may be formed such that the display 180 is able to be covered by a cover 193. Specifically, the display device 100 may include the cover 193 that is movable to cover the display 180 and a frame 191 on which the display device 100 and the cover 193 are mounted. In particular, the display device 100 may be fixed to the upper portion of the frame 191, and the cover 193 may be mounted on the frame 191 to be movable in the vertical direction in front of the display device 100.

The controller 170 may move the cover 193 in the vertical direction according to the mode of the display 180. The controller 170 may change the position of the cover 193 according to the mode of the display 180.

As shown in FIG. 9, when the mode of the display 180 is the full view mode, the controller 170 may move the cover 193 to a position where the display 180 is not covered. When the mode of the display 180 is the full view mode, the controller 170 may move the cover 193 to a position where the entire display 180 is opened.

As shown in FIG. 10, when the mode of the display 180 is the partial view mode, the controller 170 may move the cover 193 to a position where at least a portion of the display 180 is covered. When the mode of the display 180 is the partial view mode, the controller 170 may move the cover 193 to a position where only a portion of the display 180 is opened.

The cover 193 may be formed of a material such as fabric, but this is only an example and is not limited thereto.

A display device according to an embodiment of the present disclosure may provide a function of outputting recommended content according to a content recommendation command.

The content recommendation command may be a command for outputting arbitrary content. That is, the content recommendation command may be a content output command that does not specify content.

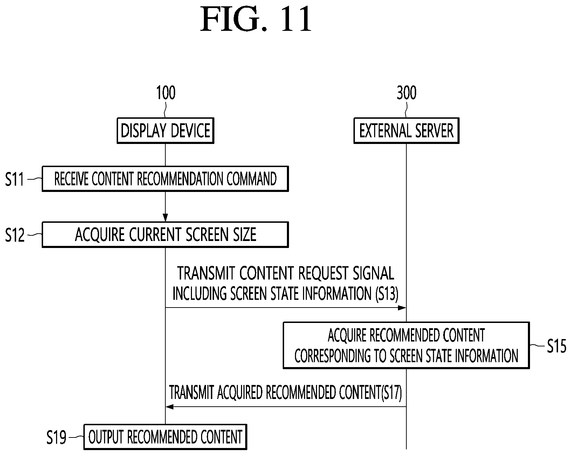

The display device 100 may output arbitrary content when receiving the content recommendation command. In particular, when receiving a content recommendation command, the display device 100 may display content received from an external server 300 (see FIGS. 11 and 10) through communication with the external server 300 (see FIGS. 11 and 10).

Meanwhile, the display device 100 according to an embodiment of the present disclosure has a screen size that varies depending on the display mode, and when content that does not fit a current screen size is received from the external server 300 (see FIGS. 11 and 10), recommended content may not be displayed. Therefore, the display device 100 according to an embodiment of the present disclosure may receive and output recommended content in consideration of a current display mode or current screen size from the external server 300 (see FIGS. 11 and 10).

That is, when receiving a content recommendation command, the controller 170 may receive recommended content according to the content recommendation command from the external server 300 (see FIGS. 11 and 10) and differently provide recommended content depending on the screen size.

The controller 170 may acquire a current screen size and output content available to a user in the acquired current screen size as recommended content.

FIG. 11 is a ladder diagram illustrating a method by which a display device according to the first embodiment of the present disclosure displays recommended content according to a content recommendation command.

**The** display device 100 may receive a content recommendation command (S11).

**A** user may request content recommendation from the display device 100 through a voice command or the remote control device 200.

For example, the controller 170 of the display device 100 may receive a voice command such as "Recommend something fun" or "I'm bored" through the voice acquisition unit 175. When the controller 170 recognizes a content request voice that does not specify a target, the controller 170 may determine that a content recommendation command has been received.

When the controller 170 receives a content recommendation command, the controller 170 may acquire a current screen size (S12).

For example, the controller 170 may acquire a current display mode and a current screen size corresponding to the current display mode.

When the controller 170 acquires the current screen size, the controller 170 may transmit a content request signal including screen state information to the external server 300 (S13).

The screen state information may mean information about the current screen of the display device 100. For example, the screen state information may include at least one of the current screen size or the current display mode.

The external server 300 may receive the content request signal including the screen state information from the display device 100.

When the external server 300 receives the content request signal, the external server 300 may acquire recommended content corresponding to the screen state information (S15).

That is, the external server 300 may acquire recommended content corresponding to the screen state information included in the content request signal. For example, the external server 300 may acquire content capable of being output in the current screen size or content capable of being output in the current display mode.

**The** external server 300 may acquire at least one recommended content based on the content request signal.

**The** external server 300 may transmit the acquired recommended content to the display device 100 (S17).

The display device 100 may receive the recommended content from the external server 300 through the wireless communication unit 173. That is, the controller 170 may receive the recommended content in response to the content request signal from the external server 300.

In this case, the recommended content received by the display device 100 may be changed according to the screen state information transmitted through the content request signal. For example, the display device 100 may receive first recommended content when the display device 100 transmits a content request signal including first screen size information to the external server 300, receive second recommended content when the display device 100 transmits a content request signal including second screen size information to the external server 300, and receive third recommended content when the display device 100 transmits a content request signal including third screen size information to the external server 300.

**The** controller 170 may output recommended content received from the external server 300 (S19).

**The** controller 170 may output the received recommended content according to the current screen size through at least one of the display 180 or the audio output unit 185 without switching the display mode.

In summary, according to the first embodiment, the controller 170 may transmit screen state information including the current screen size to the external server 300, and receive and output recommended content corresponding to the current screen size from the external server 300.

Next, a method by which the display device 100 according to a second embodiment provides recommended content according to a content recommendation command will be described.

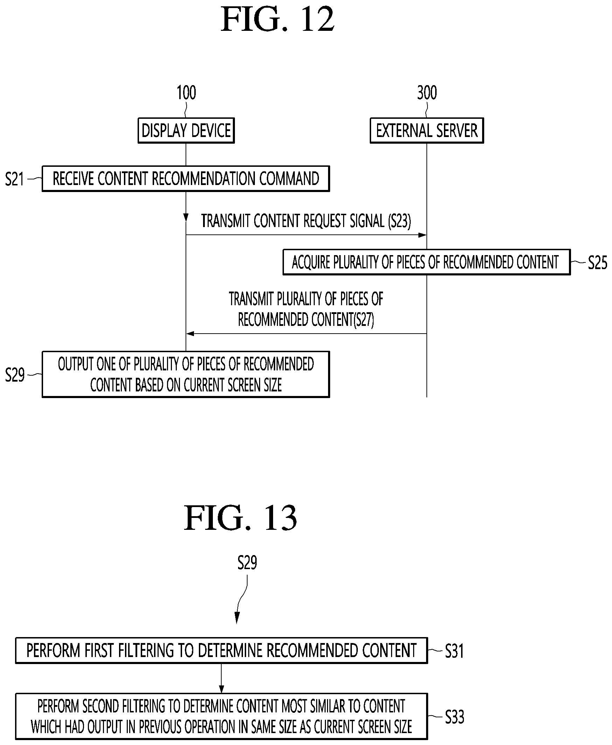

FIG. 12 is a ladder diagram illustrating a method by which a display device according to a second embodiment of the present disclosure displays recommended content according to a content recommendation command.

The display device 100 may receive a content recommendation command (S21).

Since step S21 is the same as step S11 described in FIG. 11, a duplicate description will be omitted.

When receiving the content recommendation command, the controller 170 may transmit a content request signal to the external server 300 (S23).

In this case, the controller 170 may transmit a content request signal that does not include screen state information.

The external server 300 may receive the content request signal from the display device 100.

When the external server 300 receives the content request signal, the external server 300 may acquire a plurality of pieces of recommended content (S25).

In this case, the external server 300 may acquire content for each display mode or each screen size. For example, the external server 300 may acquire at least one first recommended content corresponding to a first display mode (zero view mode), at least one second recommended content corresponding to a second display mode (partial view mode), at least one third recommended content corresponding to a third display mode (full view mode). As another example, the external server 300 may acquire at least one first recommended content corresponding to a first screen size, at least one second recommended content corresponding to a second screen size, and at least one recommended content corresponding to a third screen size.

When the external server 300 acquires a plurality of pieces of recommended content, the external server 300 may transmit the plurality of pieces of acquired recommended content to the display device 100 (S27).

The display device 100 may receive the plurality of pieces of recommended content from the external server 300 through the wireless communication unit 173.

When the controller 170 receives the plurality of pieces of recommended content from the external server 300, the controller 170 may output one of the plurality of pieces of recommended content based on a current screen size (S29).

When receiving the plurality of pieces of recommended content, the controller 170 may perform filtering to determine recommended content capable of being provided in the current screen size and output at least one of the filtered pieces of recommended content.

For example, the controller 170 may acquire at least one first recommended content corresponding to the first display mode when the current display mode is the first display mode (zero view mode), acquire at least one first recommended content corresponding to the second display mode when the current display mode is the second display mode (partial view mode), and acquire at least one third recommended content corresponding to the third display mode when the current display mode is the third display mode (full view mode).

In another example, the controller 170 may acquire, through filtering, at least one first recommended content corresponding to a first screen size among the plurality of pieces of recommended content when the current screen size is a first screen size (e.g., zero), acquire, through filtering, at least one second recommended content corresponding to a second screen size among the plurality of pieces of recommended content when the current screen size is a second screen size (e.g., a size in the partial view mode), and acquire, through filtering, at least one third recommended content corresponding to a third screen size among the plurality of pieces of recommended content when the current screen size is a third screen size (e.g., a size in the full view mode).

On the other hand, as described above, the controller 170 may perform filtering for the recommended content to be output from the plurality of pieces of content by considering the current screen state alone.

However, according to an embodiment, the controller 170 may also perform filtering to determine recommended content by considering the previous output content together with the current screen state.

Next, a method by which the display device 100 performs filtering to determine recommended content based on the current screen state and immediatelypreceding output content will be described with reference to FIG. 13.

FIG. 13 is a flowchart showing an example in which step S29 of FIG. 12 is embodied.

**The** controller 170 may perform first filtering to determine recommended content capable of being provided in the current screen size (S31).

**That** is, the controller 170 may perform first filtering to determine content capable of being output in the current screen size among a plurality of pieces of content.

Further, the controller 170 may perform second filtering to determine content that is most similar to the content which had output in the same screen size as the current screen size in a previous operation (S33).

For example, when sports game content and movie content are acquired through the first filtering, the controller 170 may acquire content when the controller 170 operated in the same screen size as the current screen size in the previous operation, through the second filtering. When the content was a movie when the controller 170 operated in the same screen size as the current screen size in the previous operation, the controller 170 may acquire movie content as recommended content through the second filtering.

**The** controller 170 may perform second filtering when there is a plurality of pieces of content acquired through the first filtering. the controller 170 may acquire content that is most similar to the content which had output in the same screen size as the current screen size in the previous operation, through the second filtering. For example, when the current screen size is a first screen size, the controller 170 may acquire content most similar to the content, which has output in the first screen size in the previous operation, from the pieces of content acquired through the first filtering.

Through this, the controller 170 has the advantage of being able to provide user-customized content while performing filtering to determine content capable of being output most quickly in the current display mode.

As described above, when there is a plurality of pieces of recommended content received from the external server 300, the controller 170 may acquire content to be output by performing filtering at least once.

The controller 170 may output one content acquired through filtering from the plurality of pieces of recommended content via at least one of the display 180 or the audio output unit 185.

In summary, according to the second embodiment, when receiving a content recommendation command, the controller 170 may receive a plurality of pieces of recommended content from the external server 300 and output one of the plurality of pieces of recommended content based on the current screen size.

As described above, when receiving a content recommendation command, the controller 170 may output recommended content through at least one of the first embodiment described with reference to FIG. 11 or the second embodiment described with reference to FIG. 12. That is, according to various embodiments of the present disclosure, when receiving a content recommendation command, the controller 170 may receive and output recommended content corresponding to the current screen from the external server 300, or perform filtering on and output recommended content received from the external server 300 according to the current screen.

Meanwhile, according to another embodiment of the present disclosure, the controller 170 may receive a content search command. When the controller 170 receives a content search command, the controller may set a search category (search range) differently according to the current screen state and then perform the search. That is, the controller 170 may set the search category (search range) differently depending on the current screen state even when the search term according to the content search command is the same.

For example, assuming that the controller 170 receives a content search command to search for the same movie title, that is, 'Gone with the Wind', for various screen states, the controller 170 may set the search category (search range) to audio when the screen size is zero or a first size, and set the search category (search range) to video when the screen size is a second size. That is, the controller 170 may search for only the music of 'Gone with the Wind' when the screen size is zero or the first size and search for music, music videos, or movies related to 'Gone with the Wind' when the screen size is the second size.

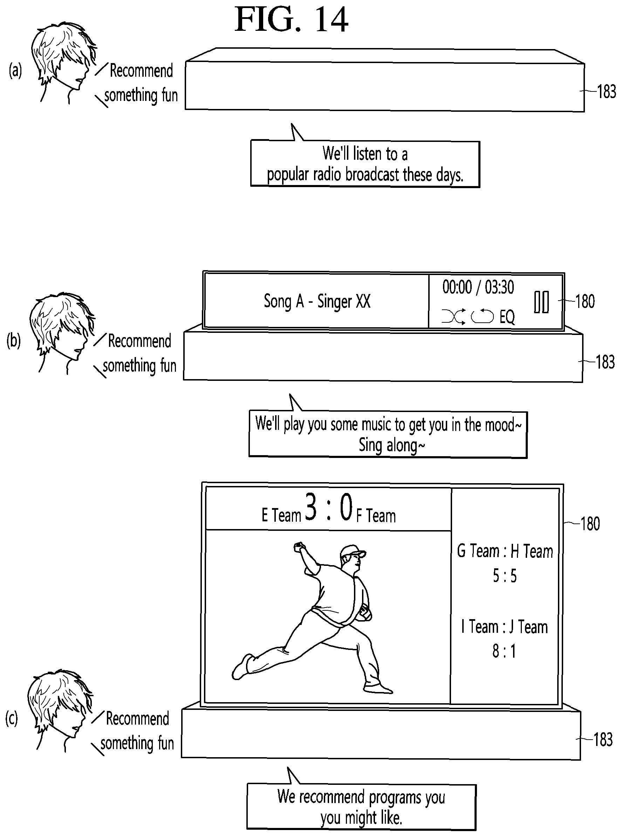

Next, a method by which the display device 100 displays recommended content or found content according to the current screen state will be described in detail with reference to FIG. 14. Meanwhile, the audio output unit 185 may be provided in the housing 183.

FIG. 14 is an example diagram illustrating a method of displaying recommended content according to a current screen in a display device according to various embodiments of the present disclosure.

As in the example shown in (a) of FIG. 14, the controller 170 may provide recommended content in which only audio is output when a screen size is zero. When the screen size is zero, the controller 170 may output recommended content only through the audio output unit 185. For example, when the screen size is zero, the controller 170 may output radio broadcasts, music, podcasts, audio clips, or audiobooks as recommended content.

As in the example shown in (b) of FIG. 14, the controller 170 may provide recommended content in which audio and summary information about the audio are output when the screen size is the first size (e.g., the screen size in the partial view mode). When the screen size is the first size, the controller 170 may output audio through the audio output unit 185 and output summary information about the audio being output through the display 180. For example, when the screen size is the first size, the controller 170 may output songs, music, foreign language dialogue, or the like through the audio output unit 185, and output song lyrics, music information, or conversation information (e.g., subtitles) through the display 180. That is, the controller 170 may output song lyrics, music information, or conversation information as summary information while also outputting audio corresponding to the summary information.

As in the example shown in (c) of FIG. 14, the controller 170may provide recommended content including images or video when the screen size is a second size larger than the first size (for example, the screen size in the full view mode). For example, when the screen size is the second size, the controller 170 may output a broadcast program, VOD, or application.

As described above, according to various embodiments of the present disclosure, the display device 100 may output recommended content associated with the screen size upon receiving a content recommendation command, thereby immediately providing recommended content without separately switching a display mode.

Meanwhile, according to another embodiment of the present disclosure, the controller 170 may recognize a user and output a notification of recommended content. Specifically, the controller 170 may identify a user watching the display device 100 and output a notification for informing a user of recommended content corresponding to the identified user on the display 180.

For example, the controller 170 may store information (e.g., genre, characters, etc.) on content which each user has watched, identify a user when the display device 100 is powered on, and output a notification for recommended content based on information on the content which each user has watched, which is stored corresponding to the identified user.

When outputting the notification for recommended content, the controller 170 may output the notification differently depending on the current screen state. That is, the controller 170 may output the notification for recommended content differently according to the screen size.

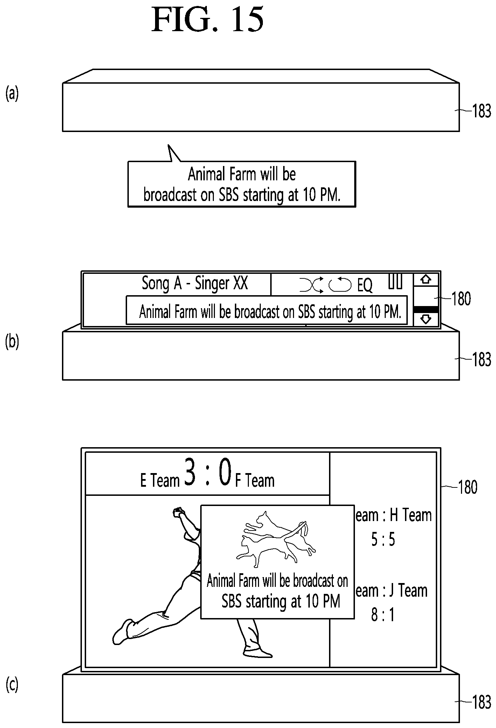

FIG. 15 is an example diagram illustrating a method of displaying a notification for recommended content according to a current screen by a display device according to an embodiment of the present disclosure.

As in the example shown in (a) of FIG. 15, when the screen size is zero, the controller 170 may control the audio output unit 185 such that a message the guiding recommended content is output through audio.

As in the example shown in (b) of FIG. 15, when the screen size is the first size, the controller 170 may control the display 180 such that text guiding the recommended content is displayed while scrolling.

As in the example shown in (c) of FIG. 15, when the screen size is the second size, the controller 170 may control the display 180 such that an image guiding the recommended content is displayed on the current content. Meanwhile, the controller 170 may control the display 180 such that text guiding the recommended content is further displayed in addition to the image guiding the recommended content displayed on the current content.

Although the descriptions are given in FIGS. 14 and 15 on the assumption that the display 180 is a rollable display, this is only an example, and the present disclosure may be applied to a variety of display devices 100 having a display 180 with a variable screen size, such as a display implemented to be covered by a cover.

The present disclosure described above may be embodied as computer readable codes on a medium in which a program is recorded. The computer-readable medium includes all kinds of recording devices in which data readable by a computer system is stored. Examples of the computer readable medium may include a hard disk drive (HDD), a solid state disk (SSD), a silicon disk drive (SDD), a ROM, a RAM, a CD-ROM, a magnetic tape, a floppy disk, an optical data storage device, and the like. Accordingly, the foregoing detailed description is not to be construed as limiting in any respect of the present disclosure and should be considered exemplary. The scope of this specification shall be determined by a reasonable interpretation of the appended claims, and all changes within the equivalents of this specification shall be included in the scope of this specification.

The above description is merely illustrative of the technical idea of the present disclosure, and various modifications and variations may be made without departing from the essential characteristics of the present disclosure by those skilled in the art to which the present disclosure pertains.

Accordingly, the embodiment disclosed in the present disclosure is not intended to limit the technical idea of the present disclosure but to describe the present disclosure, and the scope of the technical idea of the present disclosure is not limited by the embodiment.

The scope of protection of the present disclosure should be interpreted by the following claims, and all technical ideas within the scope equivalent thereto should be construed as being included in the scope of the present disclosure.

## Claims

1. A display device comprising:
a display having a variable screen size;
a wireless communication device configured to receive recommended content according to a content recommendation command from an external server when that the content recommendation command is received; and
a controller configured to provide the recommended content differently according to the screen size.

2. The display device of claim 1, wherein the controller is configured to acquire a current screen size and output content available to a user in the acquired current screen size as the recommended content.

3. The display device of claim 1, wherein the controller is configured to transmit screen state information including a current screen size to the external server and receive recommended content corresponding to the current screen size from the external server.

4. The display device of claim 1, wherein the controller is configured to:
receive a plurality of pieces of recommended content from the external server; and
output one of the plurality of pieces of recommended content based on a current screen size.

5. The display device of claim 4, wherein the controller is configured to:
perform filtering to determine pieces of recommended content available according to the current screen size when the plurality of pieces of recommended content; and
output at least one of the pieces of filtered recommended content.

6. The display device of claim 5, wherein the controller is configured to perform second filtering when there is a plurality of pieces of filtered content and output content most similar to content which had output in the same screen size as the current screen size in a previous operation.

7. The display device of claim 1, wherein the controller is configured to:
provide recommended content in which audio is output along when the screen size is zero;
provide recommended content in which audio and summary information about the audio are output when the screen size is a first size; and
provide recommended content including an image or a video when the screen size is a second size larger than the first size.

8. The display device of claim 7, wherein the controller is configured to output radio broadcasts, music, or audiobooks as the recommended content when the screen size is zero.

9. The display device of claim 7, wherein the controller is configured to:
output song lyrics, music information, or conversation information as the summary information when the screen size is the first size; and
output audio corresponding to the summary information together.

10. The display device of claim 7, wherein the controller is configured to output broadcast programs, VOD, or applications when the screen size is the second size.

11. The display device of claim 1, wherein the controller is configured to set the search category differently depending on the screen size when a content search command is received.

12. The display device of claim 11, wherein the controller is configured to:
set the search category to audio when the screen size is zero or a first size; and
set the search category to video when the screen size is a second size larger than the first size.

13. The display device of claim 1, wherein the controller is configured to:
output recommended content corresponding to a user who is watching content through a notification; and
differently output the notification depending on the screen size.

14. The display device of claim 1, further comprising:
a roller around which the display is wound to adjust the screen size; and
a housing formed with a space for accommodating the roller.

15. The display device of claim 1, further comprising:
a cover configured to move up and down to cover the display; and
a frame on which the display device and the cover are mounted.
